# EUROPEAN PATENT APPLICATION

(11) **EP 2 345 908 A2**
(43) Date of publication of application: **20.07.2011**
(21) Application number: 11150364.5
(22) Date of filing: 07.01.2011
(51) Int. Cl.: G01S 7/52

(54) **Automatic adjustment of scan angle, scan depth and scan speed in an ultrasound system**

(30) Priority: 12.01.2010 KR 20100002708
(71) Applicant: Medison Co., Ltd., Kangwon-do 250-875 (KR)
(72) Inventor: Yoo, Bong Soo, Seoul 135-851 (KR); Kim, Yun Jin, Seoul 135-851 (KR)
(74) Representative: Schmid, Wolfgang

(57) **Abstract**

An ultrasound system includes an ultrasound data acquisition unit, which is responsive to predetermined scan angle, scan depth and scan speed, configured to repeatedly transmit an ultrasound signal to a target object and receive an ultrasound echo reflected from the target object in sequential manner and form a plurality of ultrasound frame data sets based on the receive ultrasound echo. It also includes a processing unit configured to form a plurality of volume data sets each having a plurality of frames based on the plurality of ultrasound frame data sets and form at least two 2-dimensional ultrasound images based on the volume data sets. The processing unit is further configured to detect contours of the target object from the 2-dimensional ultrasound images and adjust the predetermined scan angle, scan depth and scan speed based on the detected contours.

## Description

### CROSS-REFERENCE TO RELATED APPLICATIONS

The present application claims priority from Korean Patent Application No. 10-2010-0002708 filed on January 12, 2010.

### TECHNICAL FIELD

The present invention generally relates to ultrasound systems, and more particularly to automatic adjustment of a scan angle, a scan depth and a scan speed and the like when forming an ultrasound image in an ultrasound system.

### BACKGROUND

An ultrasound system has become an important and popular diagnostic tool due to its non-invasive and non-destructive nature. The ultrasound system can provide high dimensional real-time ultrasound images of inner parts of target objects without any surgical operation.

Generally, the ultrasound system may provide a three-dimensional ultrasound image indicative of clinical information such as spatial information and anatomical figures of the target object. However, such information may not be provided by a two-dimensional ultrasound image.

The ultrasound system transmits and receives ultrasound signals to and from a target object, thereby forming volume data. The ultrasound system renders the volume data to form a 3-dimensional ultrasound image showing the target object.

Furthermore, the ultrasound system may continuously form the 3-dimensional ultrasound images in real time to provide a 4-dimensional ultrasound image. A quality of the 4-dimensional ultrasound image may vary depending on scan parameters such as scan angle, scan depth and scan speed. The scan angle represents a swing range of an array transducer within a housing of an ultrasound probe. The scan depth represents an image depth for imaging the target object in a propagation direction of the ultrasound signal from the array transducer. Further, the scan speed represents a speed for acquiring one ultrasound frame, i.e., frame rate.

Conventionally, the scan angle, the scan depth and the scan speed are manually adjusted by a user. In other words, after checking a status of the four-dimensional ultrasound image, the scan angle, the scan depth and the scan speed should be adjusted for optimizing the 4-dimensional ultrasound image according to the checking result. This may be time-consuming when acquiring an optimized 4-dimensional ultrasound image.

### SUMMARY

An embodiment for automated setting of scan parameters is disclosed herein. In one embodiment, by way of non-limiting example, an ultrasound system may include: an ultrasound data acquisition unit responsive to predetermined scan angle, scan depth and scan speed, the ultrasound data acquisition unit being configured to repeatedly transmit an ultrasound signal to a target object and receive an ultrasound echo reflected from the target object in sequential manner and form a plurality of ultrasound frame data sets based on the receive ultrasound echo; and an processing unit configured to form a plurality of volume data sets each having a plurality of frames based on the plurality of ultrasound frame data sets and form at least two 2-dimensional ultrasound images based on the volume data sets, the processing unit being further configured to detect contours of the target object from the 2-dimensional ultrasound images and adjust the predetermined scan angle, scan depth and scan speed based on the detected contours.

In another embodiment, a method of adjusting a scan angle, a scan depth and a scan speed in forming an ultrasound image in an ultrasound system, comprises: a) responsive to predetermined scan angle, scan depth and scan speed, repeatedly transmitting an ultrasound signal to a target object and receiving an ultrasound echo reflected from the target object in sequential manner to form a plurality of ultrasound frame data sets; b) forming a plurality of volume data sets each having a plurality of frames based on the plurality of ultrasound frame data sets; c) forming at least two 2-dimensional ultrasound images based on the volume data sets; and d) detecting contours of the target object from the 2-dimensional ultrasound images to adjust the predetermined scan angle, scan depth and scan speed based on the detected contours.

In yet another embodiment, a computer-readable storage medium storing instructions that, when executed by a computer, cause the computer to provide a method of adjusting a scan angle, a scan depth and a scan speed in forming an ultrasound image in an ultrasound system, the method comprises: a) forming a plurality of volume data sets each having a plurality of frames based on a plurality of ultrasound frame data sets acquired from a target objet; b) forming at least two 2-dimensional ultrasound images based on the volume data sets; and c) detecting contours of the target object from the 2-dimensional ultrasound images to adjust the predetermined scan angle, scan depth and scan speed based on the detected contours.

This Summary is provided to introduce a selection of concepts in a simplified form that are further described below in the Detailed Description. This Summary is not intended to identify key or essential features of the claimed subject matter, nor is it intended to be used in determining the scope of the claimed subject matter.

### BRIEF DESCRIPTION OF THE DRAWINGS

FIG. 1 is a block diagram showing an illustrative embodiment of an ultrasound system.
FIG. 2 is a block diagram showing an illustrative embodiment of an ultrasound data acquisition unit.
FIG. 3 is a schematic diagram showing an example of a scanning direction.
FIG. 4 is a block diagram showing an illustrative embodiment of a processor.
FIG. 5 is a schematic diagram showing an example of a volume data set.
FIG. 6 is a flowchart showing a process of adjusting a scan angle and a scan depth.
FIG. 7 is a flow chart showing a process of adjusting a scan speed.

### DETAILED DESCRIPTION

This detailed description is provided with reference to the accompanying drawings. One of ordinary skill in the art may realize that the following description is illustrative only and is not in any way limiting. Other embodiments of the present invention may readily suggest themselves to such skilled persons having the benefit of this disclosure.

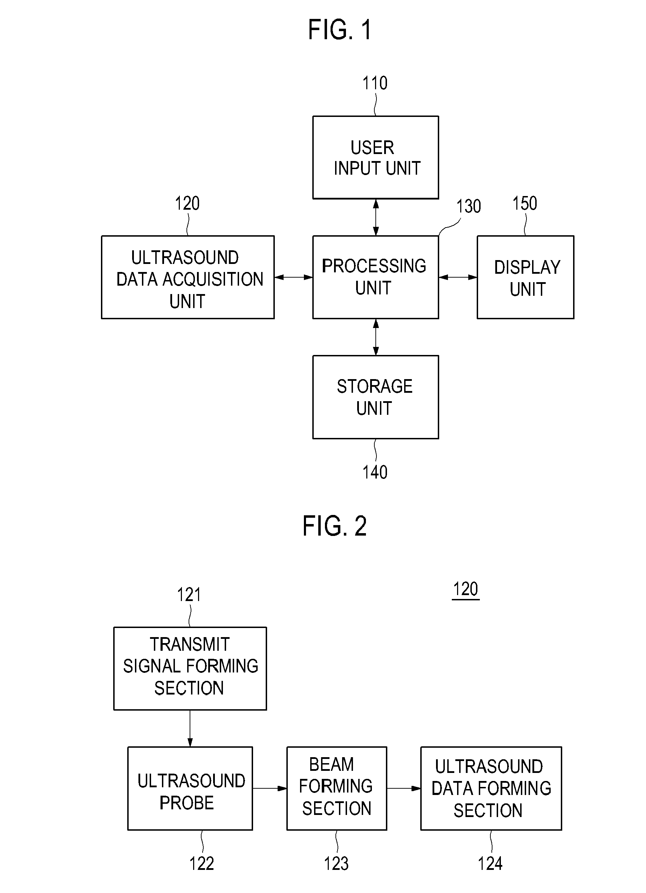

FIG. 1 is a block diagram showing an illustrative embodiment of an ultrasound system. As shown in FIG. 1, the ultrasound system 100 includes a user input unit 110 to receive user input information. The user input information includes information for selecting one of applications associated with diagnosis parts for diagnosis of a target object. The user input unit 110 includes a control panel, a mouse, a keyboard and the like.

The ultrasound system 100 further includes an ultrasound data acquisition unit 120. The ultrasound data acquisition unit 120 is configured to transmit ultrasound signals into the target object and receive ultrasound echoes from the target object, thereby acquiring a plurality of ultrasound data sets.

FIG. 2 is a block diagram showing an illustrative embodiment of the ultrasound data acquisition unit 120. Referring to FIG. 2, the ultrasound data acquisition unit 120 includes a transmit (Tx) signal forming section 121. The Tx signal forming section 121 is configured to generate a plurality of Tx signals and apply delays to the Tx signals. The delays of the Tx signals are controlled according to the selected application. That is, the Tx signals are delayed by considering a scan angle, a scan depth, a scan speed and a focal point, which are predetermined according to the selected application.

The ultrasound data acquisition unit 120 further includes an ultrasound probe 122, which is coupled to the Tx signal forming section 121. The ultrasound probe 122 includes an array transducer containing a plurality of transducer elements for reciprocal conversion between electrical signals and ultrasound signals. The ultrasound probe 122 is configured to transmit ultrasound signals in response to the Tx signals. The ultrasound probe 122 is further configured to receive ultrasound echoes reflected from the target object to thereby output a receive signal. The transmission and reception of the ultrasound signals are repeatedly performed in a sequential manner so that a plurality of receive signals is outputted. In one embodiment, the ultrasound probe includes a 3-dimensional mechanical probe, which is configured to transmit and receive an ultrasound signal while the array transducer is swung by a predetermined scan angle range (e.g., (max scan angle/2) to -(max scan angle/2)) in a housing of the ultrasound probe 122.

The ultrasound data acquisition unit 120 further includes a beam forming section 123, which is coupled to the ultrasound probe 122. If the receive signals are provided from the ultrasound probe 122, then the beam forming section 123 is configured to digitize the receive signals to form digital receive signals. The beam forming section 123 is further configured to perform receive-focusing upon the digital receive signals, i.e., apply delays to the digital receive signals in consideration of distances between the respective transducer elements and a focal point and sum the delayed digital receive signals, thereby forming a receive-focused signal. The digitization and the receive-focusing are repeatedly performed upon the receive signals to form a plurality of receive-focused signals.

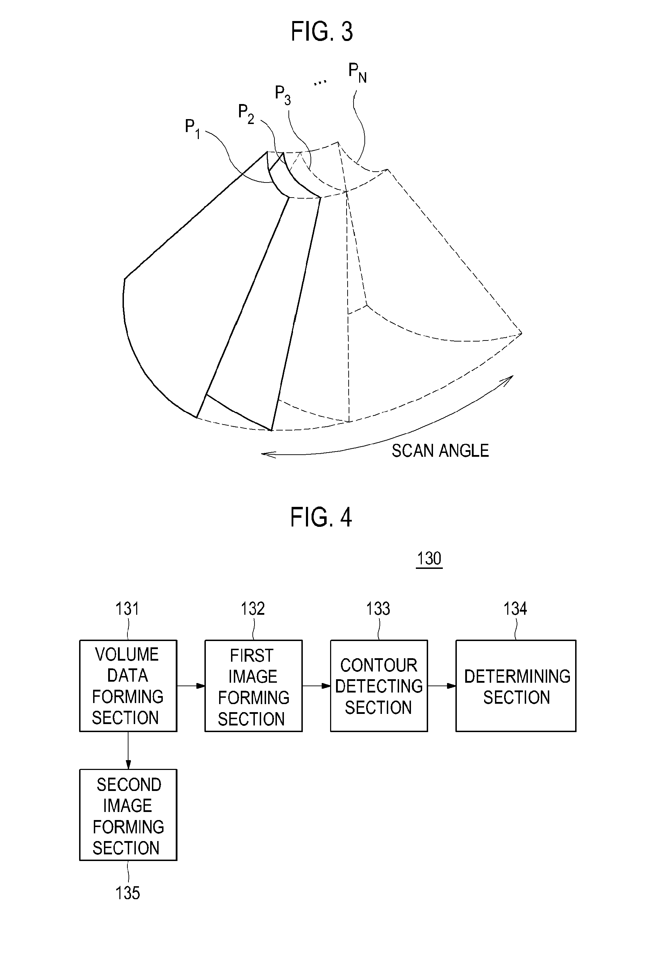

The ultrasound data acquisition unit 120 includes an ultrasound data forming section 124, which is coupled to the beam forming section 123. The ultrasound data forming section 124 is configured to form ultrasound frame data sets corresponding to frames P1, P2... PN by using the receive-focused signal, as shown in FIG. 3. Each of the ultrasound frame data sets is formed in a fan shape. However, they are not limited to this shape only and may extend to other shapes. The ultrasound frame data sets are repeatedly formed by using the plurality of receive-focused signals in a sequential manner to thereby form a plurality of ultrasound frame data sets. The ultrasound data forming section 124 is further configured to perform signal processing, such as gain adjustment, filtering and the like.

Referring back to FIG. 1, the ultrasound system 100 further includes a processing unit 130, which is coupled to the user input unit 110 and the ultrasound data acquisition unit 120. The processing unit 130 is further configured to form a volume data set by using the plurality of ultrasound frame data sets. The processing unit 130 is configured to determine a scan angle, a scan depth and a scan speed based on the volume data set. Further, the processing unit 130 is configured to form a 4-dimensional ultrasound image by using the volume data set. The operation of the processing unit 130 will be described in detail by referring to FIG. 4.

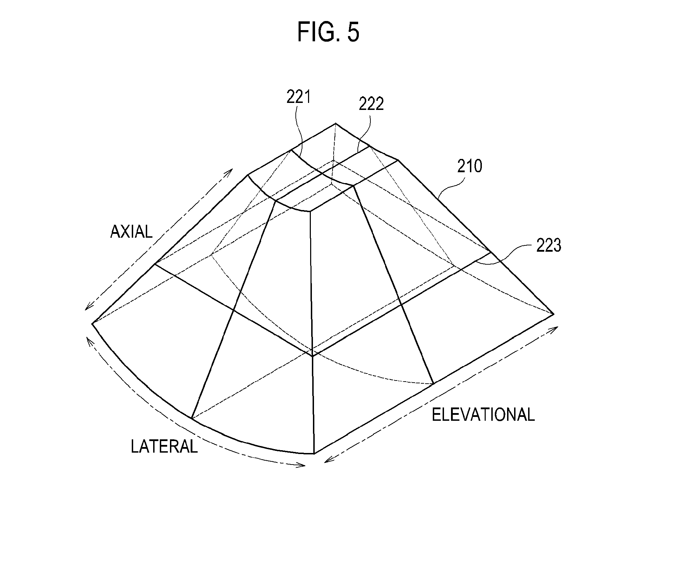

FIG. 4 is a block diagram showing an illustrative embodiment of the processing unit 130. The processing unit 130 includes a volume data forming section 131. The volume data forming section 131 is configured to form a volume data set having a plurality of frames PI, P2... PN by using the plurality of ultrasound frame data sets, which are provided from the ultrasound data acquisition unit 120, as shown in FIG. 5. The volume data set includes voxels each having a brightness value. In FIG. 5, numeral references 221 to 223 represents an A plane, a B plane and a C plane, which are perpendicular to each other. Also, an axial direction represents a propagation direction of the ultrasound signals from the ultrasound probe 122 into the target object, an lateral direction represents a direction of setting scan lines, i.e., a longitudinal direction of the array transducer, and an elevation direction, which is a depth direction of a 3-dimensional ultrasound image, represents a scan direction of frames (scan planes), i.e., a swing direction of the array transducer. The formation of the volume data set is repeatedly carried out in a sequential manner in the volume data forming section 131, so that a plurality of volume data sets is formed.

The processing unit 130 further includes a first image forming section 132, which is coupled to the volume data forming section 131. The first image forming section 132 is configured to form 2-dimensional ultrasound images based on the volume data set. In one embodiment, the 2-dimensional ultrasound images include 2-dimensional ultrasound images corresponding to a first frame and a last frame among the plurality of frames included in the volume data set and a 2-dimensional ultrasound image corresponding to a frame perpendicular to the first frame and the last frame. For example, the perpendicular frame is a frame corresponding to the B plane. Also, the 2-dimensional ultrasound image includes 2-dimensional ultrasound images corresponding to the A plane or a 2-dimensional ultrasound image corresponding to the C plane.

The processing unit 130 further includes a contour detecting section 133, which is coupled to the first image forming section 132. The contour detecting section 133 is configured to perform contour detection upon the 2-dimensional ultrasound images, which have been formed in the first image forming section 132, to detect contours of the target object. In one embodiment, the contour detection is carried out by using a contour detection mask, such as the Sobel mask, the Prewitt mask, the Robert mask, the Canny mask and the like. Also, the contour detection is achieved by using a difference of eigenvalues using a structure tensor.

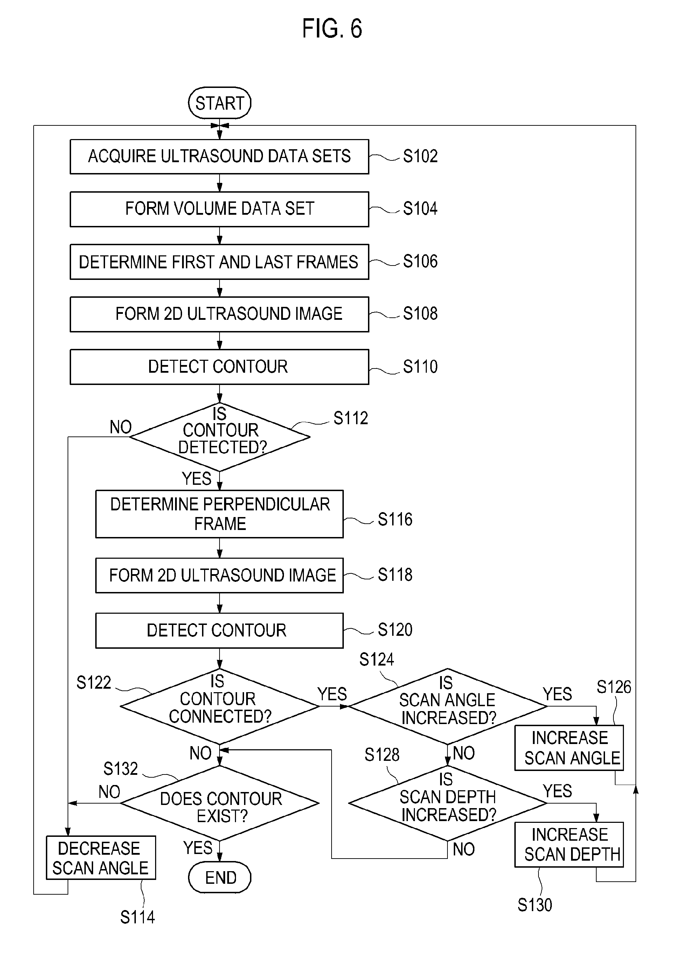

The processing unit 130 further includes a determining section 134, which is coupled to the contour detecting section 133. The determining section 134 is configured to determine new scan angle, scan depth and scan speed based on the detected contours in the contour detecting section 133. An operation of the determining section 134 will be described later in detail by referring to FIG. 6.

The processing unit 130 further includes a second image forming section 135, which is coupled to the volume data forming section 131. The second image forming section 135 is configured to perform rendering upon the plurality of volume data sets to form a 4-dimensional ultrasound image. The rendering includes ray-casting rendering, surface rendering and the like.

Referring back to FIG. 1, the ultrasound system 100 further includes a storage unit 140, which is coupled to the processing unit 130. The storage unit 140 stores the volume data sets and the 4-dimensional ultrasound images.

The ultrasound system 100 further includes a display unit 150, which is coupled to the processing unit 150. The display unit 150 displays the 4-dimensional ultrasound images and the 2-dimensional ultrasound images, which have been formed in the processing unit 130. The display unit 150 includes at least one of a cathode ray tube (CRT) display, a liquid crystal display (LCD), an organic light emitting diode (OLED) display and the like.

Hereinafter, a procedure of automatically adjusting the scan angle, the scan depth and the scan speed will be described in detail by referring to accompanying drawings.

FIG. 6 is a flowchart showing a procedure of adjusting a scan angle and a scan depth. Referring to FIG. 6, the ultrasound data acquisition unit 120 is configured to transmit ultrasound signals into the target object and receive ultrasound echoes from the target object, thereby acquiring a plurality of ultrasound data sets corresponding to the respective frames at step S102. Initially, the ultrasound data acquisition unit 120 acquires the ultrasound data sets based on a predetermined scan angle and a predetermined scan depth, which are determined according to the selected application.

If the plurality of ultrasound data sets is provided from the ultrasound data acquisition unit 120, then the volume data forming section 131 is configured to form a volume data set having a plurality of frames based thereon at step S104. The first image forming section 132 is configured to determine first and last frames from the volume data set at step S106, and then form 2-dimensional ultrasound images corresponding to the first and last frames at step S108.

The contour detecting section 133 is configured to perform contour detection upon the 2-dimensional ultrasound images to detect a contour of a target object at step S110. The determining section 134 is configured to check whether the contour of the target object is detected in the contour detecting section 133 at step S112. If it is determined that the contour is not detected, then the determining section 134 is configured to decrease the scan angle by a predetermined angle (e.g., 5 degree) for reset of the scan angle at step S114. Until the contour of the target object is detected in the contour detecting section 133, the above process from the step S102 to the step S114 is repeatedly carried out.

On the other hand, if it is determined that the contour is detected at the step S 112, then the first image forming section 132 is configured to determine a frame perpendicular to the first and the last frame from the volume data set at step S 116. The first image forming section 132 is further configured to form a 2-dimensional ultrasound image corresponding to the perpendicular frame at step S118. The contour detecting section 133 is configured to perform contour detection upon the 2-dimensional ultrasound image corresponding to the perpendicular frame to detect a contour of the target object there from at step S120.

The determining section 134 is configured to check connectivity between the contours of the target object on the 2-dimensional ultrasound images corresponding to the first and last frames and the 2-dimensonal ultrasound image corresponding to the frame perpendicular to the first and last frames at step S122. The contour connectivity is checked by using well-known methods, such as similarity calculation and the like, so that detailed explanation thereof will be omitted herein.

If it is determined that the connectivity exists at step S122, that is, it is determined that the detected contours correspond to the same object (e.g., fetus), then the determining section 134 is configured to check whether the scan angle can be increased based on a max scan angle range at step S124. If it is determined that the increase of the scan angle is allowable, then the determining section 134 is configured to increase the scan angle by the predetermined angle (e.g., 5 degrees) at step S126. On the other hand, if it is determined that the increase of the scan angle is not allowable, the determining section 134 is further configured to check whether the scan depth can be increased based on a depth limit, which is determined according to the selected application, at step S128. If it is determined that the increase of the scan depth is allowable at step S128, then the determining section 134 is configured to increase the scan depth by a predetermined length (e.g., 1 cm) for resetting the scan depth at step S130.

On the other hand, if it is determined that there is no connectivity at step S122, that is, it is determined that the detected contours correspond to different objects (e.g., fetus and uterine wall), or it is determined that the increase of the scan depth is not allowable at step S128, then the determining section 134 is configured to check whether the contours, which have been detected from the2-dimensional ultrasound image corresponding to the perpendicular frame, exist on the 2-dimensional ultrasound images corresponding to the respective first and last frames at step S 132. If it is determined that the contour exists at step S 132, the determining section 134 is configured to end setting the scan angle and the scan depth. On the other hand, if it is determined that the contour does not exists at step S 132, the determining section 134 is configured to decrease the scan angle by the predetermined angle at step S 114.

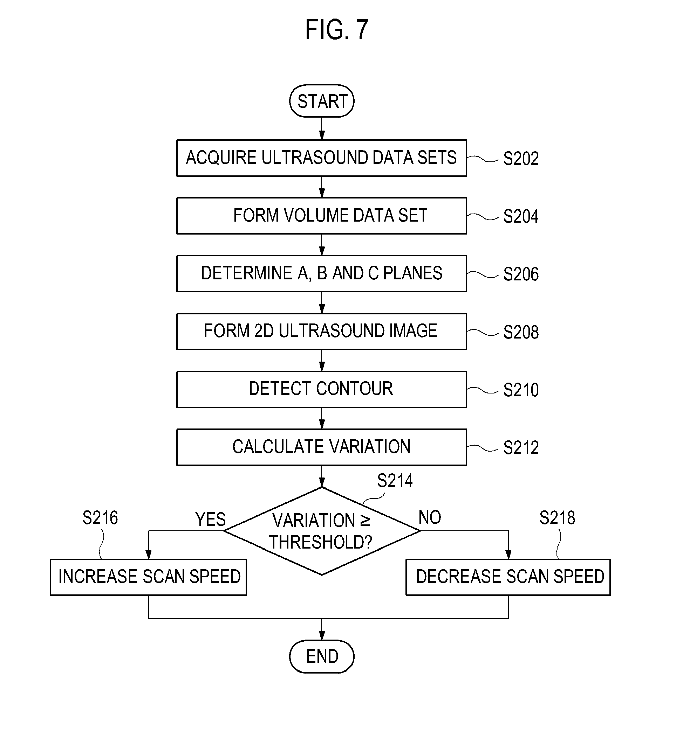

FIG. 7 is a flow chart showing a procedure of adjusting a scan speed. Referring to FIG. 7, the ultrasound data acquisition unit 120 is configured to transmit ultrasound signals into the target object and receive ultrasound echoes from the target object, thereby acquiring a plurality of ultrasound data sets corresponding to the respective frames at step S202. In this case, the ultrasound data acquisition unit 120 acquires the ultrasound data sets based on a predetermined scan speed, which is determined according to the selected application.

The volume data forming section 131 is configured to form a volume data set having a plurality of frames based on the plurality of ultrasound data sets at step S204. The first image forming section 132 is configured to determine an A plane, a B plane and a C plane from the volume data set at step S206, and then form 2-dimensional ultrasound images corresponding to the A, B and C planes at step S208.

The contour detecting section 133 is configured to perform contour detection upon the 2-dimensional ultrasound images to detect contours of a target object at step S210. The determining section 134 is configured to compute variation between a 2-dimensional ultrasound image included in an N^{th} volume data set and a 2-dimensional ultrasound image included in an (N+1)^{th} volume data set at step S210, wherein N is a positive integer equal to or greater than 1. In one embodiment, the variation is a difference of contour areas on the 2-dimensional ultrasound images corresponding to a plane at an identical location when calculation of the contour areas is possible or a difference of contour gradients on the 2-dimensional ultrasound images corresponding to a plane at an identical location when calculation of the contour areas is not possible. The determining section 134 is configured to compare the calculated variation with a predetermined threshold at step S214. If it is determined that the variation is equal to or greater than the predetermined threshold, which means that a motion of the object is relatively fast, at step S214, then the determining section 134 is configured to increase the scan speed at step S216. On the other hand, If it is determined that the variation is less than the predetermined threshold, which means that a motion of the object is relatively slow, at step S214, then the determining section 134 is configured to decrease the scan speed at step S218.

Although the above embodiment has been described that the scan speed is adjusted by using the 2-dimensional ultrasound images corresponding to the respective A, B and C plane, only one 2-dimensional ultrasound corresponding to one of the A, B and C planes are used to adjust the scan speed in accordance with another embodiment. Further, although the above embodiment has been describe that the scan angle and the scan depth are adjusted independent on the determination of the scan speed, the scan angle, the scan depth and the scan speed may be adjusted at the same time.

In another embodiment, there is provided a computer-readable storage medium storing instructions that, when executed by a computer, cause the computer to provide a method of adjusting a scan angle, a scan depth and a scan speed in forming an ultrasound image in an ultrasound system. The method comprises a) forming a plurality of volume data sets each having a plurality of frames based on a plurality of ultrasound frame data sets acquired from a target objet, b) forming at least two 2-dimensional ultrasound images based on the volume data sets, and c) detecting contours of the target object from the 2-dimensional ultrasound images to adjust the predetermined scan angle, scan depth and scan speed based on the detected contours.

Although embodiments have been described with reference to a number of illustrative embodiments thereof, it should be understood that numerous other modifications and embodiments can be devised by those skilled in the art that will fall within the scope of the principles of this disclosure. More particularly, numerous variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An ultrasound system, comprising:
an ultrasound data acquisition unit responsive to predetermined scan angle,
scan depth and scan speed, the ultrasound data acquisition unit being configured to repeatedly transmit an ultrasound signal to a target object and
receive an ultrasound echo reflected from the target object in sequential manner and form a plurality of ultrasound frame data sets based on the receive ultrasound echo; and
an processing unit configured to form a plurality of volume data sets each having a plurality of frames based on the plurality of ultrasound frame data sets and form at least two 2-dimensional ultrasound images based on the volume data sets, the processing unit being further configured to detect contours of the target object from the 2-dimensional ultrasound images and
adjust the predetermined scan angle, scan depth and scan speed based on the detected contours.

2. The ultrasound system of Claim 1, wherein the processing unit includes:
a volume data forming section configured to form the plurality of volume data sets based on the plurality of ultrasound frame data sets;
a ultrasound image forming section configured to determine at least two specific frames from each of the volume data sets and form the at least two 2-dimensional ultrasound images corresponding to the at least two specific frames;
a contour detecting section configured to perform contour detection upon the 2-dimensionla ultrasound images to detect the contours of the target object;
and
a determining section configured to adjust the predetermined scan angle, scan depth and scan speed based on the detected contours.

3. The ultrasound system of Claim 2, wherein the ultrasound image forming section is configured to determine first and last frames from each of the volume data sets and form 2-dimensional ultrasound images corresponding to the first and last frames, and wherein the determining section is configured to check whether the contours of the target object are detected in the contour detecting section and decrease, when the contours are not detected, the scan angle by a predetermined angle.

4. The ultrasound system of Claim 3, wherein the image forming section is configured to, when the contours of the target object are detected in the contour detecting section, determine a frame perpendicular to the first and last frames and form a 2-dimensional ultrasound image corresponding to the perpendicular frame,
wherein the contour detecting section is configured to detect a contour of the target object from the 2-dimensional ultrasound image corresponding to the perpendicular frame, and
wherein the determining section is configured to check connectivity between the contours of the target object on the 2-dimensional ultrasound images corresponding to the first and last frames and the 2-dimensonal ultrasound image corresponding to the perpendicular frame, and increase, when the connectivity exists, the scan angle or the scan depth.

5. The ultrasound system of Claim 4, wherein the determining section is configured to check whether the scan angle can be increased based on a max scan angle range, increase, when increase of the scan angle is allowable, the scan angle by a predetermined angle, and increase, when increase of the scan angle is not allowable, the scan depth by a predetermined length.

6. The ultrasound system of Claim 2, wherein the image forming section is configured to determine a specific plane positioned at an identical location in each of the volume data sets and form a 2-dimensional ultrasound image corresponding to the specific plane.

7. The ultrasound system of Claim 6, wherein the determining section is configured to compute variation between the 2-dimensional ultrasound image included in an N^{th} volume data set and the 2-dimensional ultrasound image included in an (N+1)^{th} volume data, wherein N is a positive integer equal to or greater than 1, the determining section being further configured to increase, when the variation is equal to or greater than a threshold, the scan speed and decrease, when the variation is less than threshold, the scan speed, and wherein the variation include an area difference or a gradient difference of the contours.

8. A method of adjusting a scan angle, a scan depth and a scan speed in forming an ultrasound image in an ultrasound system, comprising:
a) responsive to predetermined scan angle, scan depth and scan speed, repeatedly transmitting an ultrasound signal to a target object and receiving an ultrasound echo reflected from the target object in sequential manner to form a plurality of ultrasound frame data sets;
b) forming a plurality of volume data sets each having a plurality of frames based on the plurality of ultrasound frame data sets;
c) forming at least two 2-dimensional ultrasound images based on the volume data sets; and
d) detecting contours of the target object from the 2-dimensional ultrasound images to adjust the predetermined scan angle, scan depth and scan speed based on the detected contours.

9. The method of Claim 8, wherein the step c) includes:
determining first and last frames from each of the volume data sets; and
forming 2-dimensional ultrasound images corresponding to the first and last frames.

10. The method of Claim 9, wherein the step d) includes:
d1) detecting the contours of the target object from the 2-dimensional ultrasound images corresponding to the first and last frames;
d2) checking whether the contours are detected at the d1); and
d3) decreasing, when the contours are not detected, the scan angle by a predetermined angle.

11. The method of Claim 10, when the contours are detected at d2, further comprising:
e) determining a frame perpendicular to the first and last frames in the volume data sets;
f) forming a 2-dimensional ultrasound image corresponding to the perpendicular frame;
g) detecting a contour of the target object from the 2-dimensional ultrasound image corresponding to the perpendicular frame;
h) checking connectivity between the contours of the target object on the 2-dimensional ultrasound images corresponding to the first and last frames and the 2-dimensonal ultrasound image corresponding to the perpendicular frame; and
i) increasing, when the connectivity exists, the scan angle or the scan depth.

12. The method of Claim 11, wherein the step i) includes:
checking whether the scan angle can be increased based on a max scan angle range;
increasing, when the increase of the scan angle is allowable, the scan angle by a predetermined angle; and
increasing, when the increase of the scan angle is not allowable, the scan depth by a predetermined length.

13. The method of Claim 9, wherein the step c) includes:
determining a specific plane positioned at an identical location in each of the volume data sets; and
forming a 2-dimensional ultrasound image corresponding to the specific plane.

14. The method of Claim 13, wherein the step d) includes:
detecting a contour of the target object from the 2-dimensional ultrasound image for each of the volume data sets;
computing variation between the 2-dimensional ultrasound image included in an N^{th} volume data set and the 2-dimensional ultrasound image included in an (N+1)^{th} volume data, wherein N is a positive integer equal to or greater than 1,
where the variation include an area difference or a gradient difference of the contours;
comparing the variation with a threshold;
increasing, when the variation is equal to or greater than the threshold, the scan speed and decreasing, when the variation is less than threshold, the scan speed.

15. A computer-readable storage medium storing instructions that, when executed by a computer, cause the computer to provide a method of adjusting a scan angle, a scan depth and a scan speed in forming an ultrasound image in an ultrasound system, the method comprising:
a) forming a plurality of volume data sets each having a plurality of frames based on a plurality of ultrasound frame data sets acquired from a target objet;
b) forming at least two 2-dimensional ultrasound images based on the volume data sets; and
c) detecting contours of the target object from the 2-dimensional ultrasound images to adjust the predetermined scan angle, scan depth and scan speed based on the detected contours.
